# EUROPÄISCHE PATENTSCHRIFT

(11) **EP 3 993 946 B1**
(45) Veröffentlichungstag und Bekanntmachung des Hinweises auf die Patenterteilung: **21.02.2024**
(21) Anmeldenummer: 20740157.1
(22) Anmeldetag: 25.06.2020
(51) Int. Cl.: B23K 26/38, B23K 37/04, B23K 37/047, B65G 47/90, B65G 47/91

(54) **VERFAHREN ZUM TRANSPORTIEREN VON WERKSTÜCKTEILEN AUS EINER LASERSCHNEIDVORRICHTUNG**
METHOD FOR TRANSPORTING WORKPIECE PARTS FROM A LASER CUTTING DEVICE
PROCÉDÉ DE TRANSPORT DE PARTIES DE PIÈCE OUVRÉE

(30) Priorität: 05.07.2019 DE 102019209923
(43) Veröffentlichungstag der Anmeldung: 11.05.2022
(73) Patentinhaber: TRUMPF Werkzeugmaschinen SE + Co. KG, 71254 Ditzingen (DE)
(72) Erfinder: RAICHLE, Florian, 71522 Backnang (DE); SCHWALD, Bernd, Ruediger, 70563 Stuttgart (DE); KOEPP, Frederick, 70825 Muenchingen (DE); DASCH, Lena, 70176 Stuttgart (DE); ENGEL, Synnoeve, 74321 Bietigheim-Bissingen (DE); FRANK, Felix, 71229 Leonberg (DE); GOMMEL, Ulrich, 71287 Weissach (DE); WIPPER, Joachim, 71254 Ditzingen (DE); WOLF, Dennis, 71277 Rutesheim (DE); RAUSCHER, Steffen, 73265 Dettingen unter Teck (DE)
(74) Vertreter: Trumpf Patentabteilung
(86) Internationale Anmeldenummer: PCT/EP2020/067844
(87) Internationale Veröffentlichungsnummer: WO 2021/004801

(56) Entgegenhaltungen:
- WO-A1-2006/066430
- DE-A1-102017 216 828
- DE-T5-112014 002 188
- DE-T5-112014 002 190
- DE-U1-202015 009 235

## Beschreibung

Die vorliegende Erfindung betrifft ein Verfahren zum Transportieren von Werkstückteilen von einem Schneidbereich einer Laserschneidmaschine in einen Lagerungsbereich, umfassend: Bewegen mindestens einer ersten Haltevorrichtung zum Halten von Werkstückteilen entlang einer ersten Führung in einer Transportrichtung quer zu einer Bewegungsrichtung eines Laserschneidkopfs der Laserschneidmaschine, sowie Bewegen mindestens einer zweiten Haltevorrichtung zum Halten von Werkstückteilen entlang einer zweiten Führung in der Transportrichtung quer zur Bewegungsrichtung des Laserschneidkopfs.

An Laserschneidanlagen, bei denen die Bewegung des Werkstücks in einer Richtung und Bewegung des Schneidkopfs in einer dazu senkrechten Richtung erfolgt, wie sie beispielsweise in DE102014209811B4, DE102017216828B4 oder DE102018203061.8 beschrieben sind, kann das Schneiden von Werkstückteilen und der Abtransport der Werkstückteile abwechselnd bzw. zeitgleich erfolgen, d.h. es werden freigeschnittene Werkstückteile aus dem Schneidbereich in den Lagerungsbereich transportiert, bevor oder während weitere Werkstückteile aus dem Werkstück (im Folgenden auch: Werkstücktafel) geschnitten werden. Ähnliche Technologien sind ferner beispielsweise aus der DE112014002188T5 bekannt, bei der ebenfalls Werkstücke mittels einer Haltevorrichtung zwischen einem Schneidbereich und einem Lagerungsbereich transportiert werden.

Die in den o.g. Dokumenten beschriebenen Haltevorrichtungen weisen Halteeinrichtungen auf, die beispielsweise als Flächensauger ausgebildet sein können, um freigeschnittene Werkstückteile zu halten und aus dem Schneidbereich der Laserschneidmaschine zu einem Lagerungsbereich abzutransportieren. Die Haltevorrichtungen können einzeln oder in Gruppen an Führungen angebracht sein, die quer zur Bewegungsrichtung des Laserschneidkopfs bzw. quer zu einem Spalt verlaufen, an dem der Schneidbereich gebildet ist. Die Führungen, z.B. in Form von Führungsschienen, können wiederum an ebenfalls verfahrbaren Trägern angebracht sein, die beispielsweise entlang der Bewegungsrichtung des Laserschneidkopfs verfahren werden können. Auf diese Weise können die Haltevorrichtungen jeweils einen Teil der Werkstücklagerungsebene überfahren, ohne miteinander zu kollidieren.

Bei derartigen Laserschneidanlagen kann es bei einer Belegung der Werkstücktafel mit vielen verhältnismäßig kleinen Werkstückteilen (insbesondere ohne Innenkonturen), die schnell geschnitten werden können, dazu kommen, dass bei einer üblicherweise erfolgenden zeilenweisen Abarbeitung der Werkstücktafel eine Haltevorrichtung, die gerade ein Werkstückteil zum Lagerungsbereich transportiert, nicht rechtzeitig beim Schnittende des nächsten Werkstückteils wieder zur Entnahme bzw. zum Transport des nächsten freigeschnittenen Werkstückteils zur Verfügung steht.

### Aufgabe der Erfindung

Der Erfindung liegt die Aufgabe zugrunde, ein Verfahren bereitzustellen, welches die Geschwindigkeit der Entnahme bzw. des Transports von Werkstückteilen an einer Laserschneidmaschine erhöht.

### Gegenstand der Erfindung

Diese Aufgabe wird durch ein Verfahren der eingangs genannten Art gelöst, bei dem erste Werkstückteile, die in einer bezogen auf die Bewegungsrichtung des Laserschneidkopfs ersten Hälfte des Werkstücks innerhalb des Schneidbereichs geschnitten werden, mittels der mindestens einen ersten Haltevorrichtung von dem Schneidbereich in den Lagerungsbereich transportiert werden, bei dem zweite Werkstückteile, die in dem Schneidbereich in einer bezogen auf die Bewegungsrichtung des Laserschneidkopfs zweiten Hälfe des Werkstücks innerhalb des Schneidbereichs geschnitten werden, mittels der mindestens einen zweiten Haltevorrichtung von dem Schneidbereich in den Lagerungsbereich transportiert werden, und bei dem das Transportieren eines ersten Werkstückteils und eines zweiten Werkstückteils jeweils abwechselnd erfolgt.

Gemäß der Erfindung wird vorgeschlagen, die Werkstückteile mit einer optimierten Abarbeitungsreihenfolge aus der Werkstücktafel zu schneiden und abzutransportieren. Dazu wird die Werkstücktafel für die Belegung mit Werkstückteilen entlang einer (virtuellen) Mittellinie, die senkrecht zur Bewegungsrichtung des Laserschneidkopfs verläuft, in zwei Hälften geteilt. Die Werkstückteile, die - bezogen auf die Bewegungsrichtung des Laserschneidkopfs - in derselben Hälfte des Werkstücks angeordnet sind bzw. geschnitten werden, werden von einer oder mehreren der Haltevorrichtungen transportiert, die an derselben Führung angeordnet bzw. angebracht sind. Auf diese Weise können die erste(n) bzw. zweite(n) Haltevorrichtungen abwechselnd jeweils (mindestens) ein Werkstückteil aus der ersten bzw. der zweiten Hälfte des Werkstücks entnehmen und transportieren, ohne sich gegenseitig zu behindern. Sind in der Laserschneidanlage Haltevorrichtungen an mehr als zwei Führungen vorhanden, so können beispielsweise die an zwei Führungen vorgesehenen Haltevorrichtungen (jeweils allein oder gemeinsam) Werkstückteile aus der einen Werkstückhälfte transportieren und die Haltevorrichtungen der dritten Führung Werkstückteile aus der zweiten Werkstückhälfte.

Bevorzugt wird während des Transportierens eines ersten Werkstückteils mittels der mindestens einen ersten Haltevorrichtung ein zweites Werkstückteil von dem Werkstück (frei-)geschnitten, und umgekehrt, d.h. während des Transportierens eines zweiten Werkstückteils wird ein erstes Werkstückteil von dem Werkstück (frei-)geschnitten.

Während ein erstes Werkstückteil von einer Haltevorrichtung bzw. einer Gruppe von Haltevorrichtungen entlang einer ersten Führung vom Schneidbereich weg transportiert wird, kann ein zweites Werkstückteil freigeschnitten werden. Zusätzlich kann das zweite Werkstückteil von einer zweiten Haltevorrichtung oder einer zweiten Gruppe von Haltevorrichtungen der zweiten Führung in dem Schneidbereich gegriffen bzw. gehalten und transportiert werden. Auf diese Weise wird die Geschwindigkeit bei der Abarbeitung der Werkstücktafel deutlich erhöht: Die Positionierung der Haltevorrichtungen kann während der Schneidzeit erfolgen und die Produktivität der Laserschneidmaschine kann gesteigert werden.

Bei einer Variante erfolgt das abwechselnde Transportieren der ersten Werkstückteile und der zweiten Werkstückteile jeweils ausgehend vom bezogen auf die Bewegungsrichtung des Laserschneidkopfs seitlichen Rand des Werkstücks zur Mitte des Werkstücks oder umgekehrt, d.h. von der Mitte des Werkstücks nach außen. Das abwechselnde Schneiden und der abwechselnde Transport der ersten und zweiten Werkstückteile erfolgt in diesem Fall in einer Abarbeitungsreihenfolge von außen nach innen oder von innen nach außen, d.h. die Abarbeitungsrichtung des Schneidens bzw. des Transports der ersten/zweiten Werkstückteile in der jeweiligen Hälfte des Werkstücks verläuft gegenläufig. Die Festlegung der Bewegungsrichtung folgt zwei Optimierungszielen: Zum einen soll so viel Abstand zwischen den Haltevorrichtungen gehalten werden, dass sich diese nicht im Weg stehen. Zum anderen soll die Positionierzeit des Laserkopfes zwischen zwei Bearbeitungen so gering wie möglich sein.

Bei einer alternativen Variante erfolgt das Transportieren der ersten Werkstückteile ausgehend von einem bezogen auf die Bewegungsrichtung des Laserschneidkopfs seitlichen ersten Rand des Werkstücks zur Mitte des Werkstücks und das Transportieren der zweiten Werkstückteile erfolgt ausgehend von der Mitte des Werkstücks zu einem bezogen auf die Bewegungsrichtung des Laserschneidkopfs seitlichen zweiten Rand des Werkstücks, oder umgekehrt. In diesem Fall ist die Abarbeitungsrichtung in den beiden Hälften des Werkstücks gleich ausgerichtet. Auf diese Weise haben die Haltevorrichtungen der ersten und zweiten Führung stets einen ähnlichen Abstand zueinander und somit eine geringe Wahrscheinlichkeit, dass sich diese im Weg stehen.

Bei einer weiteren Variante sind die abwechselnd transportierten ersten und zweiten Werkstückteile in einer Mehrzahl von Zeilen angeordnet, die parallel zur Bewegungsrichtung des Laserschneidkopfs verlaufen. In diesem Fall werden die Werkstückteile nacheinander Zeile für Zeile geschnitten und der abwechselnde Transport der ersten und zweiten Werkstückteile erfolgt ebenfalls Zeile für Zeile. Die Werkstückteile, die aus dem Werkstück geschnitten werden, können in diesem Fall insbesondere in einer regelmäßigen Anordnung (Matrix, Raster) mit mehreren Zeilen und mehreren Spalten auf dem Werkstück angeordnet sein.

Bei einer Weiterbildung wird ein Werkstückteil, das in einer jeweiligen Zeile in der Mitte des Werkstücks geschnitten wird, als erstes oder als letztes Werkstückteil der jeweiligen Zeile vom Schneidbereich in den Lagerungsbereich transportiert. Für den Fall, dass in einer Zeile eine ungerade Anzahl von Werkstückteilen geschnitten werden soll, ist typischerweise in der Mitte des Werkstücks ein Werkstückteil vorhanden, das sich ausgehend von der Mitte (der Mittel-Linie) in die erste Hälfte und in die zweite Hälfte des Werkstücks erstreckt. Ein solches Werkstückteil kann daher nicht eindeutig einer Hälfte des Werkstücks zugeordnet werden und wird bei der Bearbeitung einer jeweiligen Zeile bevorzugt als erstes oder als letztes geschnitten und abtransportiert, da so am einfachsten kurze Positionierzeiten des Bearbeitungskopfs und der Haltevorrichtungen erreicht werden.

Bei einer weiteren Weiterbildung wird das letzte geschnittene Werkstückteil einer ersten Zeile von der ersten Haltevorrichtung von dem Schneidbereich in den Lagerungsbereich transportiert und das letzte geschnittene Werkstückteil einer zweiten, unmittelbar auf die erste folgenden Zeile wird von der zweiten Haltevorrichtung von dem Schneidbereich in den Lagerungsbereich transportiert, oder umgekehrt. Bei dem letzten Werkstückteil handelt es sich in der Regel um das in der Mitte des Werkstücks geschnittene Werkstückteil. Dieses Werkstückteil, das sich in beide Hälften des Werkstücks erstreckt, wird in aufeinanderfolgenden Zeilen abwechselnd von der ersten Haltevorrichtung bzw. der ersten Gruppe von Haltevorrichtungen und von der zweiten Haltevorrichtung bzw. der zweiten Gruppe von Haltevorrichtungen abtransportiert. Die jeweils andere Haltevorrichtung bzw. die jeweils andere Gruppe von Haltevorrichtungen beginnt mit dem Schneiden des ersten Werkstückteils in der nächsten Zeile. Insbesondere in diesem Fall ist es günstig, wenn das erste geschnittene Werkstückteil der ersten Zeile ein erstes Werkstückteil und das erste geschnittene Werkstückteil der zweiten Zeile ein zweites Werkstückteil ist, oder umgekehrt, d.h. wenn die Bearbeitungsreihenfolge in den beiden unmittelbar aufeinander folgenden Zeilen vertauscht wird.

Bei einer weiteren Variante werden erste Werkstückteile an ersten Freischneidepositionen entlang ihrer Schneidkonturen und zweite Werkstückteile werden an zweiten Freischneidepositionen entlang ihrer Schneidkonturen freigeschnitten, wobei die ersten und zweiten Freischneidepositionen in Bezug auf die Bewegungsrichtung des Laserschneidkopfs an entgegengesetzten Seiten der jeweiligen Schneidkonturen positioniert sind. In der Regel erfolgt bei dieser Variante nicht nur das Freischneiden der jeweiligen Werkstückteile sondern auch das Anschneiden, d.h. der Beginn des Schnitts, an entgegengesetzten Seiten der jeweiligen Schneidkonturen.

Dieses Vorgehen ist insbesondere für den Fall vorteilhaft, dass die Haltevorrichtungen bzw. deren Halteeinrichtungen, z.B. in Form von Flächensaugern, bereits vor dem Freischnitt auf dem Werkstückteil abgesetzt werden, um dessen Lage zu stabilisieren ("Prefix"). Die Freischneideposition sollte zu diesem Zweck auf der dem Anfahrtsweg der Haltevorrichtung abgewandten Seite des Werkstückteils liegen, damit die Haltevorrichtung beim Freischnitt des Werkstückteils nicht mit dem Laserschneidkopf kollidiert. Da der Anfahrtsweg bzw. der Transportweg der ersten und zweiten Haltevorrichtungen von bzw. zum Lagerungsbereich in der Regel im Wesentlichen spiegelsymmetrisch zur Mittel-Linie des Werkstücks verläuft, ist es günstig, wenn die Freischneidepositionen der ersten und zweiten Werkstückteile ebenfalls spiegelsymmetrisch zur Mittel-Linie angeordnet sind.

Bei einer Weiterbildung befinden sich die ersten und zweiten Freischneidepositionen an einer der Mitte des Werkstücks zugewandten Seite der jeweiligen Schneidkonturen. Dies ist günstig, wenn die jeweiligen Ablagebereiche des Lagerungsbereichs für die ersten Werkstückteile und für die zweiten Werkstückteile in Bezug auf die Mittel-Linie des Werkstücks weiter außen angeordnet sind als die jeweiligen zu transportierenden Werkstückteile: In diesem Fall verläuft der Anfahrweg der Haltevorrichtungen in Bewegungsrichtung des Schneidkopfs von außen nach innen, so dass durch eine solche Anordnung der Freischneidepositionen eine Kollision der Haltevorrichtungen mit dem Laserschneidkopf vermieden werden kann.

Bei einer weiteren Variante werden die ersten Werkstückteile in einer bezogen auf die Mitte des Werkstücks ersten Seite einer Ablagefläche des Lagerungsbereichs abgelegt und die zweiten Werkstückteile werden in in einer bezogen auf die Mitte des Werkstücks zweiten Seite einer Ablagefläche des Lagerungsbereichs abgelegt. Um Kollisionen zwischen den ersten Haltevorrichtungen und den zweiten Haltevorrichtungen zu vermeiden, werden die ersten Werkstückteile, die aus der ersten Hälfte des Werkstücks geschnitten werden, in Bezug auf die Mitte des Werkstücks auf derselben, d.h. der ersten Seite der Ablagefläche abgelegt. Entsprechend werden die zweiten Werkstückteile, die aus der zweiten Hälfte des Werkstücks geschnitten werden, auf der zweiten Seite der Ablagefläche abgelegt. Auf diese Weise kann vermieden werden, dass die ersten oder zweiten Haltevorrichtungen beim Transport der Werkstückteile die Mitte bzw. die Mittel-Linie des Werkstücks überqueren müssen.

Bei einer Variante weisen alle ersten Werkstückteile dieselbe Geometrie auf. Auf diese Weise kann die Anzahl der (sortenreinen) Teilestapel verringert werden, die auf einer ersten Seite einer Ablagefläche des Lagerungsbereichs gebildet werden. Es versteht sich, dass entsprechend auch alle zweiten Werkstückteile dieselbe Geometrie aufweisen können, wodurch sich die Anzahl der (sortenreinen) Teilestapel verringert, die auf einer zweiten Seite einer Ablagefläche des Lagerungsbereichs gebildet werden.

Bei einer Weiterbildung weisen alle Werkstückteile, d.h. sowohl die ersten Werkstückteile als auch die zweiten Werkstückteile, dieselbe Geometrie auf. In diesem Fall kann die Zahl der (sortenreinen) Teilestapel auf der Ablagefläche minimiert werden.

Bei einer weiteren Variante weisen die ersten Werkstückteile und die zweiten Werkstückteile eine unterschiedliche Geometrie auf. Werkstückteile, die eine unterschiedliche Geometrie bzw. einen unterschiedlichen Typ aufweisen, werden vorzugsweise so auf dem Werkstück angeordnet, dass sich der eine Typ von Werkstückteilen in der ersten Hälfte des Werkstücks befindet und der zweite Typ von Werkstückteilen in der zweiten Hälfte des Werkstücks. Auf diese Weise wird der Lagerungsbereich besser ausgenutzt, da auf der Ablagefläche eine geringere Anzahl von Teilestapeln gebildet werden kann.

Bei einer weiteren Variante der Erfindung kann das Verfahren ferner umfassen: Schneiden eines Werkstückteils entlang eines ersten Abschnitts einer Schneidkontur, während die mindestens eine erste Haltevorrichtung oder die mindestens eine zweite Haltevorrichtung in Transportrichtung bewegt wird, sowie Schneiden des Werkstückteils entlang eines zweiten Abschnitts der Schneidkontur vor dem Freischneiden des Werkstückteils an einer Freischneideposition, während das Werkstückteil von der mindestens einen ersten Haltevorrichtung oder von der mindestens einen zweiten Haltevorrichtung gehalten wird.

Bei dieser Variante der Erfindung wird zur weiteren Erhöhung der Bearbeitungsgeschwindigkeit für Werkstückteile, die von einer Haltevorrichtung im Moment des Freischnitts gehalten werden sollen, die Schneidkontur im Programmiersystem in mehrere Abschnitte unterteilt. Der erste Abschnitt der Schneidkontur, der bevorzugt einen Großteil der Schneidkontur des Werkstückteils bildet, kann in diesem Fall noch während der Transportbewegung der Haltevorrichtung(en) entlang der Führung geschnitten werden. Nur beim zweiten Abschnitt, der ein letztes Teilstück der Schneidkontur vor der Freischneideposition bildet, muss/müssen die Haltevorrichtung(en) auf dem Werkstück aufgesetzt sein. Auf diese Weise können Wartezeiten verringert oder vermieden werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Beispiels einer maschinellen Anordnung mit einer Laserschneidmaschine und mit einer Entnahmevorrichtung zum Transportieren von Werkstückteilen,
- Fig. 2: eine Darstellung von zwei Gruppen mit jeweils drei Haltevorrichtungen, die an einer ersten bzw. zweiten Führungsschiene verschiebbar geführt sind,
- Fig. 3a,b: Darstellungen eines Werkstücks mit einer Mehrzahl von in Zeilen und Spalten angeordneten Werkstückteilen sowie mit einer Abarbeitungsreihenfolge für die jeweils ersten drei Zeilen von Werkstückteilen,
- Fig. 4: eine Darstellung des Werkstücks von Fig. 3a,b mit Freischneidepositionen der Werkstückteile und mit einem Lagerungsbereich, sowie
- Fig. 5: eine Darstellung eines Werkstückteils, dessen Schneidkontur in einen ersten Abschnitt und in einen zweiten Abschnitt unterteilt ist.

In der folgenden Beschreibung der Zeichnungen werden für gleiche bzw. funktionsgleiche Bauteile identische Bezugszeichen verwendet.

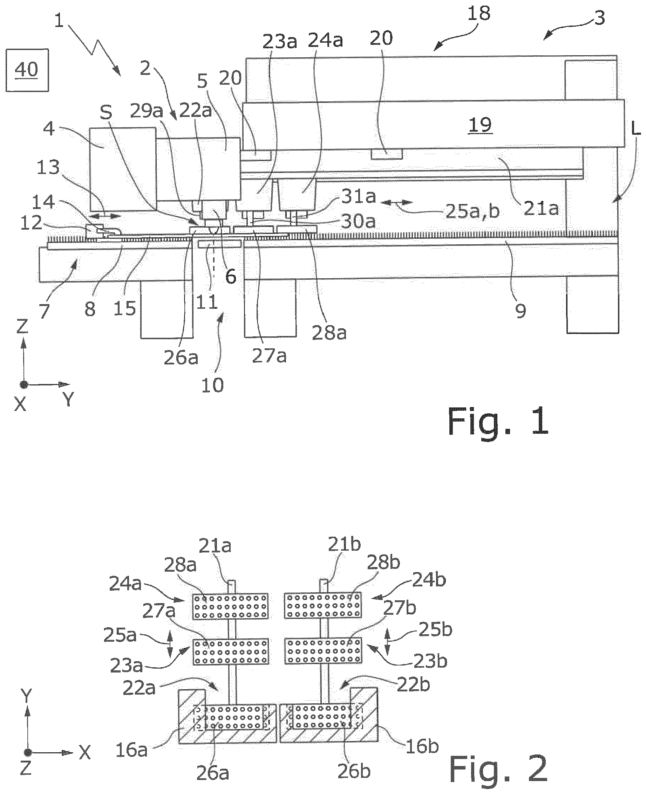

**Fig. 1** zeigt eine maschinelle Anordnung 1, die eine Laserschneidmaschine 2 sowie eine Vorrichtung zum Transportieren von Werkstückteilen aufweist, die eine Entladestation 3 der Laserschneidmaschine 2 bildet. Die hier beispielhaft gezeigte Laserschneidmaschine 2 weist eine nicht bildlich dargestellte Führungsstruktur mit einem Portalquerträger 4 auf, entlang dessen sich eine Bewegungseinheit 5 mit einem Laserschneidkopf 6 in einer Bewegungsrichtung senkrecht zur Zeichenebene von Fig. 1 verfahren lässt, welche die X-Richtung eines XYZ-Koordinatensystems bildet. Außerdem kann der Laserschneidkopf 6 relativ zu dem Portalquerträger 4 Bewegungen in vertikaler Richtung (Z-Richtung) ausführen.

Der Portalquerträger 4 überspannt eine Werkstückauflage 7, die an ihrer Oberseite in herkömmlicher Weise mit Auflagebürsten besetzt ist. Die Werkstückauflage 7 umfasst einen bearbeitungsseitigen Auflagetisch 8 sowie einen damit in horizontaler Richtung fluchtenden entladeseitigen Auflagetisch 9. Der bearbeitungsseitige Auflagetisch 8 und der entladeseitige Auflagetisch 9 sind durch einen Auflage-Zwischenraum 10 (Spalt) getrennt, in welchem sich eine Absaugeinrichtung befindet und/oder ein oder mehrere Werkstückunterstützungsschlitten 11 in X-Richtung senkrecht zur Zeichenebene bewegbar angeordnet sein können.

An dem bearbeitungsseitigen Auflagetisch 8 ist eine sich in X-Richtung, d.h. senkrecht zur Zeichenebene, erstreckende Querschiene 12 mit Hilfe einer durch einen Doppelpfeil angedeuteten Bewegungseinrichtung 13 in positiver und in negativer Y-Richtung motorisch bewegbar geführt. Die Querschiene 12 ist mit mehreren in Längsrichtung der Querschiene 12 gegeneinander versetzten Spannpratzen 14 versehen. Die Spannpratzen 14 halten ein plattenartiges Werkstück 15 vor und während der schneidenden Bearbeitung mittels des Laserschneidkopfs 6, wobei die schneidende Bearbeitung des Werkstücks 15 in einem Schneidbereich S der Laserschneidmaschine 2 zwischen den beiden Auflagetischen 8, 9 erfolgt. Die Spannpratzen 14 halten nach der Bearbeitung des Werkstücks 15 und dem damit verbundenen Austrennen von als Werkstückausschnitt erstellten, von dem Werkstück 15 getrennten Werkstückteilen 16a, 16b (vgl. **Fig. 2**) ein bei der Bearbeitung des Werkstücks 15 zusätzlich zu den Werkstückteilen 16a, 16b erzeugtes, als Restgitter vorliegendes Restwerkstück.

Die Entladestation 3 umfasst ein Gestell 18, an welchem ein horizontaler Träger 19 gelagert ist. Kragarme 20, die senkrecht zur Zeichenebene verlaufen, lagern eine erste und zweite Führung in Form einer ersten und zweiten in Y-Richtung verlaufenden Führungsschiene 21a, 21b (vgl. auch Fig. 2) bei Bewegungen der jeweiligen Führungsschiene 21a, 21b entlang der Kragarme 20 senkrecht zur Zeichenebene, d.h. in X-Richtung. Wie in Fig. 2 zu erkennen ist, können längs der ersten Führungsschiene 21a drei erste Haltevorrichtungen 22a, 23a, 24a mit Hilfe einer durch einen Doppelpfeil angedeuteten ersten Bewegungseinrichtung 25a in positiver und negativer Y-Richtung (Transportrichtung) über die Werkstückauflage 7 bewegt werden. Entsprechend können längs der zweiten Führungsschiene 21b drei zweite Haltevorrichtungen 22b, 23b, 24b mit Hilfe einer zweiten Bewegungseinrichtung 25b unabhängig von den drei ersten Haltevorrichtungen 22a, 23a, 24a in positiver und negativer Y-Richtung über die Werkstückauflage 7 bewegt werden. Die Haltevorrichtungen 22a,b, 23a,b, 24a,b können entlang der Transportrichtung Y von dem Schneidbereich S in einen Lagerungsbereich L bewegt bzw. verschoben werden, um in dem Schneidbereich S geschnittene Werkstückteile 16a, 16b in den Lagerungsbereich L zu transportieren. Der Lagerungsbereich L kann einen Teil des Auflagetisches 9 bilden und beispielsweise am äußeren Rand des Auflagetisches 9 angeordnet sein. Alternativ kann der Lagerungsbereich L neben dem Auflagetisch 9 und neben dem Gestell 18 angeordnet sein, wenn die Führungsschienen 21a, 21b länger als in Fig. 1 gezeigt ausgebildet oder teleskopartig ausziehbar sind.

Die drei ersten Haltevorrichtungen 22a, 23a, 24a weisen jeweils eine erste Halteeinrichtung in Form eines ersten Flächensaugers 26a, 27a, 28a auf. Entsprechend weisen auch die drei zweiten Haltevorrichtungen 22b, 23b, 24b jeweils eine zweite Halteeinrichtung in Form eines zweiten Flächensaugers 26b, 27b, 28b auf. Die drei ersten und zweiten Halteeinrichtungen bzw. die Flächensauger 26a,b, 27a,b, 28a,b sind baugleich und können mit Hilfe von jeweils drei ersten und zweiten, als Stellantriebe fungierenden pneumatischen Kolben-Zylinder-Einheiten 29a,b, 30a,b, 31a,b in vertikaler Richtung (Z-Richtung) verschoben und zugestellt werden. Die Halteeinrichtungen 26a,b, 27a,b, 28a,b in Form der Flächensauger ermöglichen es, von dem Werkstück 15 freigeschnittene Werkstückteile 16a, 16b zu halten, wie dies beispielsweise in der eingangs zitierten DE 10 2014 209 811 B4 beschrieben ist, die durch Bezugnahme in ihrer Gesamtheit zum Inhalt dieser Anmeldung gemacht wird.

Eine in Fig. 1 schematisch dargestellte programmierbare numerische Steuerungseinrichtung 40 steuert alle wesentlichen Funktionen sowohl an der Laserschneidmaschine 2 als auch an der Entladestation 3 der maschinellen Anordnung 1. Von der numerischen Steuerungseinrichtung 40 gesteuert werden insbesondere der als Werkstückantrieb und auch als Restwerkstückantrieb fungierende motorische Antrieb 13 für die Querschiene 12 an der Laserschneidmaschine 2, der in Fig. 1 durch einen Doppelpfeil angedeutet ist, sowie die in Fig. 2 gleichfalls durch Doppelpfeile angedeuteten motorischen Bewegungseinrichtungen 25a,b für die drei ersten bzw. zweiten Haltevorrichtungen 22a,b, 23a,b, 24a,b. Zusätzlich zu dem Werkstück-Antrieb 13 und den Bewegungseinrichtungen 25a,b für die drei ersten und zweiten Haltevorrichtungen 22a,b, 23a,b, 24a,b sind unter anderem der Übersichtlichkeit halber nicht dargestellte weitere motorische Antriebe vorgesehen, mittels derer die horizontalen Bewegungen der Führungsschienen 21a,b ausgeführt werden und zu deren Steuerung gleichfalls die numerische Steuerungseinrichtung 40 der maschinellen Anordnung 1 genutzt wird.

Anders als weiter oben beschrieben wurde, kann die numerische Steuerungseinrichtung 40 einen Teil der Entladestation 3 bilden bzw. es können für die numerische Steuerung der Laserschneidmaschine 2 und der Entladestation 3 zwei separate numerische Steuerungseinrichtungen vorgesehen sein. Die Steuerungsprogramme für die programmierbare numerische Steuerungseinrichtung 40 werden in der Regel mit Hilfe eines Programmiersystems erzeugt, dass auf einem separaten Computer abläuft. Mittels des Programmiersystems werden die Orientierung der Werkstückteile 16a,b innerhalb des Werkstücks 15 (Schachtelung), die Bearbeitungsparameter für die schneidende Bearbeitung sowie die Positionierung weiterer Maschinenkomponenten wie beispielsweise der Haltevorrichtungen 22a,b, 23a,b, 24a,b während und nach der Bearbeitung festgelegt.

In der Darstellung von Fig. 2 sind zwei Werkstückteile 16a,b gezeigt, die der Laserschneidkopf 6 in dem Schneidbereich S, der zwischen den beiden Auflagetischen 8, 9 der Werkstückauflage 7 gebildet ist, mit jeweils einen (abschließenden) Trennschnitt aus dem in Fig. 1 gezeigten Werkstück 15 austrennt und zusätzlich als Restwerkstück das Restgitter erzeugt. Eine oder mehrere der an den ausgefahrenen Kolbenstangen der pneumatischen ersten bzw. zweiten Kolben-Zylinder-Einheiten 29a,b, 30a,b, 31a,b angebrachten ersten bzw. zweiten Halteeinrichtungen in Form der Flächensauger 26a,b, 27a,b, 28a,b liegen mit ihrer Unterseite an der Oberseite des jeweiligen Werkstückteils 16a,b an, um diese zu halten.

Nach dem Freiwerden des ersten Werkstückteils 16a wird von der Steuerungseinrichtung 40 die erste Bewegungseinrichtung 25a zur Bewegung der ersten Haltevorrichtungen 22a, 23a, 24a aktiviert, um das erste Werkstückteil 16a mittels einer oder mehrerer der Flächensauger 26a, 27a, 28a aus dem Schneidbereich S der Laserschneidmaschine 2 in Transportrichtung Y entlang der ersten Führungsschiene 21a in den Lagerungsbereich L zu transportieren. Entsprechend wird nach dem Freiwerden des zweiten Werkstückteils 16b von der Steuerungseinrichtung 40 die zweite Bewegungseinrichtung 25b zur Bewegung der zweiten Haltevorrichtungen 22b, 23b, 24b aktiviert, um das zweite Werkstückteil 16b mittels einer oder mehrerer der zweiten Flächensauger 26b, 27b, 28b aus dem Schneidbereich S der Laserschneidmaschine 2 in Transportrichtung Y entlang der zweiten Führungsschiene 21b in den Lagerungsbereich L zu transportieren.

Die Zahl der zum Verschieben eingesetzten ersten bzw. zweiten Flächensauger 26a,b, 27a,b, 28a,b richtet sich nach der Größe und Form des ersten bzw. des zweiten Werkstückteils 16a,b. Bei dem in Fig. 2 gezeigten Beispiel wird zum Transport des ersten/zweiten Werkstückteils 16a,b jeweils nur einer der ersten/zweiten Flächensauger 26a,b benötigt.

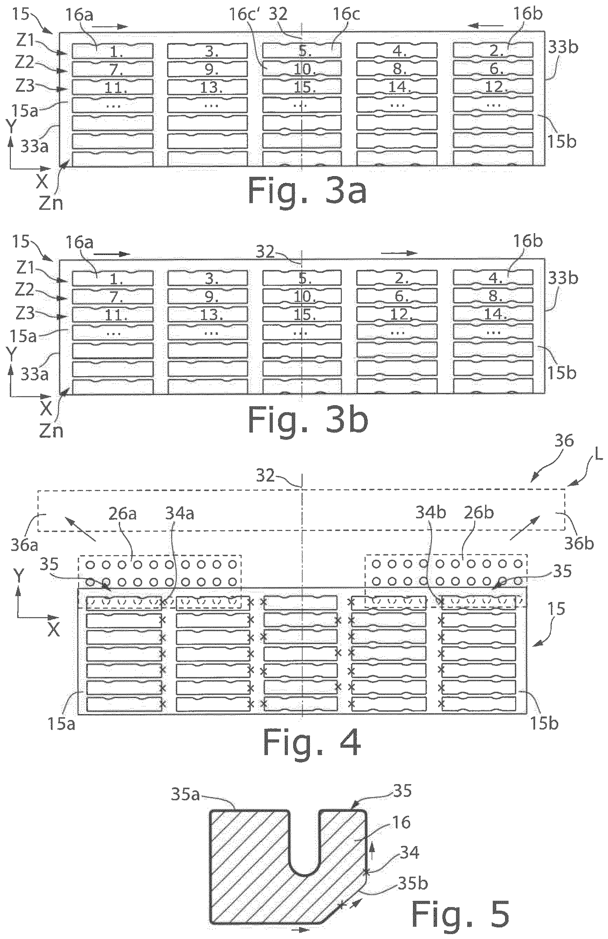

Zur Erhöhung der Geschwindigkeit des Transports bzw. der Entnahme von Werkstückteilen 16a,b von dem Schneidbereich S in den Lagerungsbereich L werden erste Werkstückteile 16a, die in einer bezogen auf die Bewegungsrichtung X des Laserschneidkopfs 6 ersten Hälfte 15a des Werkstücks 15 (vgl. **Fig. 3a****,b**) innerhalb des Schneidbereichs S geschnitten werden, mittels der ersten Haltevorrichtung(en) 22a, 23a, 24a von dem Schneidbereich S in den Lagerungsbereich L transportiert, während zweite Werkstückteile 16b, die in einer bezogen auf die Bewegungsrichtung X des Laserschneidkopfs 6 zweiten Hälfte 15b des Werkstücks 15 geschnitten werden, mittels der zweiten Haltevorrichtung(en) 22b, 23b, 24b von dem Schneidbereich S in den Lagerungsbereich L transportiert werden. Die erste Hälfte 15a und die zweite Hälfte 15b des Werkstücks 15 werden durch eine in Transportrichtung Y verlaufende (gedachte) Mittellinie 32 getrennt, die nachfolgend als Mitte 32 des Werkstücks 15 bezeichnet wird.

Das Transportieren der ersten Werkstückteile 16a und der zweiten Werkstückteile 16b von dem Schneidbereich S in den Lagerungsbereich L sowie das (Frei-) Schneiden der ersten Werkstückteile 16a und der zweiten Werkstückteile 16b in dem Schneidbereich S erfolgt abwechselnd. Während des Transportierens eines ersten Werkstückteils 16a mittels der mindestens einen ersten Haltevorrichtung 22a, 23a, 24a wird hierbei ein zweites Werkstückteil 16b von dem Werkstück 15 freigeschnitten und umgekehrt. Auf diese Weise wird die Geschwindigkeit bei der Abarbeitung des Werkstücks 15 deutlich erhöht: Die Positionierung der Haltevorrichtungen 22a,b, 23a,b, 24a,b kann während der Schneidzeit erfolgen und die Produktivität der Laserschneidmaschine 2 kann gesteigert werden.

Bei dem in Fig. 3a,b gezeigten Beispiel sind die ersten und zweiten Werkstückteile 16a,b, die aus dem Werkstück 15 geschnitten werden, in einer regelmäßigen Anordnung mit einer Anzahl n von Zeilen Z1, Z2, ..., Zn, angeordnet, die sich parallel zur Bearbeitungsrichtung X des Laserschneidkopfs 6 erstrecken, sowie in einer Anzahl von fünf Spalten, die sich in Transportrichtung Y erstrecken. Die in den ersten zwei Spalten angeordneten ersten Werkstückteile 16a sind vollständig in der ersten Hälfte 15a des Werkstücks 15 angeordnet, die in der vierten und fünften Spalte angeordneten zweiten Werkstückteile 16b sind vollständig in der zweiten Hälfte 15b des Werkstücks 15 angeordnet. Durch die in der dritten, mittleren Spalte angeordneten Werkstückteile 16c, 16c` verläuft die Mitte 32 des Werkstücks 15, d.h. diese Werkstückteile 16c, 16c` sind teilweise in der ersten Hälfte 15a und teilweise in der zweiten Hälfte 15b des Werkstücks 15 angeordnet.

Das Schneiden und das Transportieren der Werkstückteile 16a, 16b, 16c, 16c` erfolgt in einer Abarbeitungsreihenfolge, die in Fig. 3a,b jeweils für die ersten drei Zeilen Z1, Z2, Z3 dargestellt ist. Nachfolgend wird die Abarbeitungsreihenfolge der ersten und der zweiten Werkstückteile 16a,b der ersten Zeile Z1 von Fig. 3a beschrieben:
In Fig. 3a erfolgt das Transportieren und das Schneiden der ersten und zweiten Werkstückteile 16a, 16b jeweils ausgehend von einem in Bezug auf die Bewegungsrichtung X des Laserschneidkopfs 6 seitlichen ersten Rand 33a bzw. zweiten Rand 33b des Werkstücks 15: In einem ersten Schritt wird das in der ersten Spalte - benachbart zum ersten Rand 33a des Werkstücks 15 - angeordnete erste Werkstückteil 16a (Ziffer 1.) geschnitten und mittels der ersten Haltevorrichtung 22a aus dem Schneidbereich S in den Lagerungsbereich L transportiert. Während des Transports des ersten Werkstückteils 16a wird das in der fünften Spalte - benachbart zum zweiten Rand 33b des Werkstücks 15 - angeordnete zweite Werkstückteil 16b (Ziffer 2.) mittels des Laserschneidkopfs 6 geschnitten. Nachfolgend wird dieses zweite Werkstückteil 16b mittels der zweiten Haltevorrichtung 22b aus dem Schneidbereich S in den Lagerungsbereich L transportiert. Parallel dazu wird das in der zweiten Spalte angeordnete erste Werkstückteil 16a (Ziffer 3.) geschnitten, das näher an der Mitte 32 des Werkstücks 15 liegt als das in der ersten Spalte angeordnete erste Werkstückteil 16a. Das in der zweiten Spalte angeordnete erste Werkstückteil 16a wird nachfolgend mittels der ersten Haltevorrichtung 22a in den Lagerungsbereich L transportiert, während parallel das in der vierten Spalte angeordnete zweite Werkstückteil 16b (Ziffer 4.) geschnitten wird. Das in der vierten Spalte angeordnete zweite Werkstückteil 16b wird dann mittels der zweiten Haltevorrichtung 22b in den Lagerungsbereich L transportiert, während das in der dritten, mittleren Spalte angeordnete Werkstückteil 16c (Ziffer 5.) als letztes Werkstückteil der ersten Zeile Z1 geschnitten wird. Das letzte Werkstückteil 16c in der ersten Zeile Z1 wird nachfolgend von der ersten Haltevorrichtung 22a in den Lagerungsbereich L transportiert und die Bearbeitung der ersten Zeile Z1 ist abgeschlossen.

Bei dem in Fig. 3b gezeigten Beispiel erfolgt das Transportieren der ersten Werkstückteile 16a ausgehend von dem bezogen auf die Bewegungsrichtung X des Laserschneidkopfs 6 ersten Rand 33a des Werkstücks 15 zur Mitte 32 des Werkstücks 15, das Transportieren der zweiten Werkstückteile 16b erfolgt jedoch - abweichend von Fig. 3a - ausgehend von der Mitte 32 des Werkstücks 15 zu einem bezogen auf die Bewegungsrichtung X des Laserschneidkopfs 6 zweiten seitlichen Rand 33b des Werkstücks 15. Die zugehörige Abarbeitungsreihenfolge ist in Fig. 3b dargestellt. Wie in Fig. 3b zu erkennen ist, erfolgt in Fig. 3b die Abarbeitung in beiden Hälften 15a, 15b des Werkstücks 15 gleichläufig, d.h. in derselben (positiven) X-Richtung, während in Fig. 3a die Abarbeitung der Werkstückteile 16a,b in den beiden Hälften 15a, 15b gegenläufig erfolgt, wie in Fig. 3a,b jeweils durch Pfeile angedeutet ist. Es versteht sich, dass die Bearbeitung in Fig. 3b auch in (negativer) X-Richtung erfolgen kann, d.h. das Transportieren der ersten Werkstückteile 16a kann ausgehend von der Mitte 32 des Werkstücks 15 erfolgen und das Transportieren der zweiten Werkstückteile 16b kann ausgehend von zweiten seitlichen Rand 33b des Werkstücks 15 erfolgen.

Wie weiter oben in Zusammenhang mit Fig. 3a,b beschrieben wurde, wird das in der Mitte 32 des Werkstücks 15 angeordnete Werkstückteil 16c als letztes Werkstückteil der ersten Zeile Z1 geschnitten und als letztes Werkstückteil vom Schneidbereich S in den Lagerungsbereich L transportiert, und zwar mittels einer der ersten Haltevorrichtungen 22a, 23a, 24a. Entsprechend wird auch das in der Mitte 32 des Werkstücks 15 angeordnete Werkstückteil 16c` in der zweiten Zeile Z2 als letztes Werkstückteil der zweiten Zeile Z2 geschnitten. Allerdings wird das letzte Werkstückteil 16c' der zweiten Zeile Z2 nicht von einer der ersten Haltevorrichtungen 22a, 23a, 24a, sondern von einer der zweiten Haltevorrichtungen 22b, 23b, 24b vom Schneidbereich S in den Lagerungsbereich L transportiert. Entsprechend wird auch bei den weiteren Zeilen Z3, ..., Zn das mittlere Werkstückteil 16c, 16c` als letztes geschnitten. Wie bei der ersten Zeile Z1 und der zweiten Zeile Z2 erfolgt der Abtransport des letzten Werkstückteils 16c, 16c' in aufeinanderfolgenden Zeilen Zᵢ, Zᵢ₊₁ jeweils abwechselnd mittels der ersten Haltevorrichtung(en) 22a, 23a, 24a oder mittels der zweiten Haltevorrichtung(en) 22b, 23b, 24b. Dies ist günstig, um eine möglichst schnelle Abarbeitung bzw. Teileentnahme zu ermöglichen. Die jeweils andere Gruppe von Halteeinrichtungen 22a,b, 23a,b, 24a,b übernimmt hierbei jeweils den Abtransport des ersten oder zweiten Werkstückteils 16a,b, das in den jeweils nachfolgenden Zeilen als erstes geschnitten wird.

Wie in **Fig. 4** zu erkennen ist, werden die ersten Werkstückteile 16a an ersten Freischneidepositionen 34a an einer der Mitte 32 des Werkstücks 15 zugewandten, in Fig. 4 rechten Seite ihrer jeweiligen Schneidkonturen 35 freigeschnitten. Entsprechend werden die zweiten Werkstückteile 16b an zweiten Freischeidepositionen 34b freigeschnitten, die sich ebenfalls an einer der Mitte 32 des Werkstücks 15 zugewandten, in Fig. 4 linken Seite der jeweiligen Schneidkonturen 35 befinden. Die ersten Werkstückteile 16a und die zweiten Werkstückteile 16b werden somit an einander entgegengesetzten Seiten ihrer jeweiligen Schneidkonturen 35 freigeschnitten. Dies ist insbesondere für den Fall günstig, dass die ersten Halteeinrichtungen 26a, 27a, 28a bzw. die zweiten Halteeinrichtungen 26b, 27b, 28b bereits vor dem Freischneiden auf dem jeweiligen Werkstückteil 16a, 16b abgesetzt werden, um dessen Lage relativ zum (Rest-)Werkstück 15 zu stabilisieren. Die Freischneidepositionen 34a, 34b sollten hierbei auf der der Mitte 32 des (plattenförmigen) Werkstücks 15 zugewandten Seite positioniert sein, um zu verhindern, dass der Laserschneidkopf 6 beim Freischneiden mit der jeweiligen Halteeinrichtung 26a,b, 27a,b, 28a,b kollidiert.

Zudem sollte die jeweilige Freischneideposition 34a, 34b bezogen auf die Bewegungsrichtung X des Laserschneidkopfs 6 an einer dem Anfahrts- bzw. Bewegungsweg der Halteeinrichtungen 26a,b, 27a,b, 28a,b bzw. der diesen zugeordneten Haltevorrichtungen 22a,b, 23a,b, 24a,b abgewandten Seite angeordnet sein. Wie in Fig. 4 durch zwei Pfeile angedeutet ist, erfolgt der Transport der ersten und zweiten Werkstückteile 16a,b nicht nur in Transportrichtung Y, d.h. senkrecht zur Bewegungsrichtung X des Laserschneidkopfs 6, sondern die Transportbewegung weist auch eine Komponente entlang der X-Richtung auf, die jeweils von der Mitte 32 des Werkstücks 15 weg gerichtet ist, d.h. in negativer X-Richtung für den Transport der ersten Werkstückteile 16a und in positiver X-Richtung für den Transport der zweiten Werkstückteile 16b. Für die Bewegung der ersten bzw. zweiten Haltevorrichtungen 22a,b, 23a,b, 24a,b in X-Richtung wird die erste bzw. zweite Führungsschiene 21a, 21b an den Kragarmen 20 mittels geeigneter motorischer Antriebe in X-Richtung verschoben.

Wie in Fig. 4 ebenfalls zu erkennen ist, werden die ersten Werkstückteile 16a auf einer bezogen auf die Mitte 32 des Werkstücks 15 ersten Seite 36a einer Ablagefläche 36 des Lagerungsbereichs L abgelegt. Entsprechend werden die zweiten Werkstückteile 16b auf einer bezogen auf die Mitte 32 des Werkstücks 15 zweiten Seite 36b einer Ablagefläche 36 des Lagerungsbereichs L abgelegt. Auf diese Weise kann eine Kollision zwischen den ersten Haltevorrichtungen 22a, 23a, 24a und den zweiten Haltevorrichtungen 22b, 23b, 24b beim Transport der ersten und zweiten Werkstückteile 16a,b vom Schneidbereich S in den Lagerungsbereich L vermieden werden.

Wie in Fig. 3a,b und in Fig. 4 ebenfalls zu erkennen ist, weisen die ersten Werkstückteile 16a und die zweiten Werkstückteile 16b eine unterschiedliche Geometrie auf. So wird der Platz im Lagerungsbereich L optimal genutzt, da die Anzahl der (sortenrein) zu bildenden Teilestapel sich auf diese Weise verringert. Wie in Fig. 3a,b und in Fig. 4 ebenfalls zu erkennen ist, weist das in der ersten Zeile Z1 in der Mitte 32 des Werkstücks 15 angeordnete Werkstückteil 16c dieselbe Geometrie auf wie die ersten Werkstückteile 16a. Dies ist günstig, damit dieses Werkstückteil 16c mittels der ersten Haltevorrichtungen 22a, 23a, 24a in den Lagerungsbereich L transportiert und dort auf demselben Stapel wie die ersten Werkstückteile 16a abgelegt werden kann. Entsprechend weist das in der zweiten Zeile Z2 in der Mitte 32 des Werkstücks 15 angeordnete Werkstückteil 16c' eine Geometrie auf, die derjenigen der zweiten Werkstückteile 16b entspricht. Dieses Werkstückteil 16c' kann daher mit Hilfe der zweiten Haltevorrichtungen 22b, 23b, 24b in den Lagerungsbereich L transportiert wird und dort auf demselben Stapel wie die zweiten Werkstückteile 16b abgelegt werden. Für die in der Mitte der weiteren Zeilen Z3, .., Zn angeordneten Werkstückteile 16c, 16c' gilt das oben Gesagte analog.

Um die Bearbeitungsgeschwindigkeit weiter zu erhöhen, kann bei Werkstückteilen 16a, 16b, 16c, 16c`, die beim bzw. unmittelbar vor dem Freischneiden von den ersten bzw. zweiten Halteeinrichtungen 26a,b, 27a,b, 28a,b gehalten werden sollen, die Schneidkontur 35 im Programmiersystem bzw. in der Steuerungseinrichtung 40 in mehrere Abschnitte unterteilt werden. **Fig. 5** zeigt dieses Vorgehen beispielhaft für ein erstes Werkstückteil 16a, dessen Schneidkontur 35 in zwei Abschnitte 35a, 35b eingeteilt wurde. Bei dem in Fig. 5 gezeigten Beispiel erfolgt das Schneiden des ersten Werkstückteils 16a entlang des ersten Abschnitts 35a der Schneidkontur 35, während die mindestens eine erste Haltevorrichtung 22a, 23a, 24a, welche das Werkstückteil 16a beim Freischneiden halten soll, in Transportrichtung Y in den Schneidbereich S bewegt wird. Entlang eines zweiten Abschnitts 35b der Schneidkontur 35, der an einer Position in der Nähe der Freischneideposition 34 beginnt, wird das erste Werkstückteil 16a von der ersten Haltevorrichtung 22a, 23a, 24a, genauer gesagt von der Halteeinrichtung 26a, 27a, 28a in Form eines Flächensaugers gehalten, bis das erste Werkstückteil 16a an der Freischneideposition 34 vollständig vom (Rest-)Werkstück 15 getrennt wird. Es versteht sich, dass dieses Vorgehen analog für die zweiten Werkstückteile 16b durchgeführt werden kann. In diesem Fall dienen die zweiten Haltevorrichtungen 22b, 23b, 24b bzw. deren zweite Halteeinrichtungen 26b, 27b, 28b dazu, das zweite Werkstückteil 16b vor dem Freischneiden zu halten. Analog kann auch für die Werkstückteile 16c, 16c' in der Mitte 32 des Werkstücks 15 vorgegangen werden.

Zusammenfassend kann auf die weiter oben beschriebene Weise die für das Schneiden und für die Entnahme bzw. den Transport von Werkstückteilen 16a,b, 16c, 16c' aus dem Schneidbereich S der Laserschneidanlage 2 in einen Lagerungsbereich L benötigte Gesamtbearbeitungszeit verringert und so die Produktivität der maschinellen Anordnung 1 deutlich erhöht werden.

## Patentansprüche

1. Verfahren zum Transportieren von Werkstückteilen (16a, 16b) aus einem Schneidbereich (S) einer Laserschneidmaschine (2) in einen Lagerungsbereich (L), umfassend:
Bewegen mindestens einer ersten Haltevorrichtung (22a, 23a, 24a) zum Halten von Werkstückteilen (16a) entlang einer ersten Führung (21a) in einer Transportrichtung (Y) quer zu einer Bewegungsrichtung (X) eines Laserschneidkopfs (6) der Laserschneidmaschine (2), sowie Bewegen mindestens einer zweiten Haltevorrichtung (22b, 23b, 24b) zum Halten von Werkstückteilen (16b) entlang einer zweiten Führung (21b) in der Transportrichtung (Y) quer zur Bewegungsrichtung (X) des Laserschneidkopfs (6),
**dadurch gekennzeichnet,**
**dass** erste Werkstückteile (16a), die innerhalb des Schneidbereichs (S) in einer bezogen auf die Bewegungsrichtung (X) des Laserschneidkopfs (6) ersten Hälfte (15a) eines Werkstücks (15) geschnitten werden, mittels der mindestens einen ersten Haltevorrichtung (22a, 23a, 24a) von dem Schneidbereich (S) in den Lagerungsbereich (L) transportiert werden,
**dass** zweite Werkstückteile (16b), die innerhalb des Schneidbereichs (S) in einer bezogen auf die Bewegungsrichtung (X) des Laserschneidkopfs (6) zweiten Hälfe (15b) des Werkstücks (15) geschnitten werden, mittels der mindestens einen zweiten Haltevorrichtung (22b, 23b, 24b) von dem Schneidbereich (S) in den Lagerungsbereich (L) transportiert werden, und
**dass** das Transportieren eines ersten Werkstückteils (16a) und eines zweiten Werkstückteils (16b) jeweils abwechselnd erfolgt.

2. Verfahren nach Anspruch 1, bei dem während des Transportierens eines ersten Werkstückteils (16a) mittels der mindestens einen ersten Haltevorrichtung (22a, 23a, 24a) ein zweites Werkstückteil (16b) von dem Werkstück (15) freigeschnitten wird, und umgekehrt.

3. Verfahren nach Anspruch 1 oder 2, bei dem das abwechselnde Transportieren der ersten Werkstückteile (16a) und der zweiten Werkstückteile (16b) jeweils ausgehend vom bezogen auf die Bewegungsrichtung (X) des Laserschneidkopfs (6) seitlichen Rand (33a, 33b) des Werkstücks (15) zur Mitte (32) des Werkstücks (15) erfolgt, oder umgekehrt.

4. Verfahren nach Anspruch 1 oder 2, bei dem das Transportieren der ersten Werkstückteile (16a) ausgehend von einem bezogen auf die Bewegungsrichtung (X) des Laserschneidkopfs (6) seitlichen ersten Rand (33a) des Werkstücks (15) zur Mitte (32) des Werkstücks (15) erfolgt und bei dem das Transportieren der zweiten Werkstückteile (16b) ausgehend von der Mitte (32) des Werkstücks (15) zu einem bezogen auf die Bewegungsrichtung (X) des Laserschneidkopfs (6) seitlichen zweiten Rand (33b) des Werkstücks (15) erfolgt, oder umgekehrt.

5. Verfahren nach einem der vorhergehenden Ansprüche, bei dem die abwechselnd zu transportierenden ersten und zweiten Werkstückteile (16a, 16b) in einer Mehrzahl von Zeilen (Z1, ..., Zn) angeordnet sind, die parallel zur Bewegungsrichtung (X) des Laserschneidkopfs (6) verlaufen.

6. Verfahren nach Anspruch 5, bei dem ein Werkstückteil (16c, 16c`), das in einer jeweiligen Zeile (Z1, ..., Zn) in der Mitte (32) des Werkstücks (15) geschnitten wird, als erstes oder als letztes Werkstückteil der jeweiligen Zeile (Z1, ..., Zn) von dem Schneidbereich (S) in den Lagerungsbereich (L) transportiert wird.

7. Verfahren nach einem der Ansprüche 5 oder 6, bei dem das letzte geschnittene Werkstückteil (16c) einer ersten Zeile (Z1) von der mindestens einen ersten Haltevorrichtung (22a, 23a, 24a) von dem Schneidbereich (S) in den Lagerungsbereich (L) transportiert wird und bei dem das letzte geschnittene Werkstückteil (16c`) einer zweiten, unmittelbar auf die erste folgenden Zeile (Z2) von der mindestens einen zweiten Haltevorrichtung (22b, 23b, 24b) von dem Schneidbereich (S) in den Lagerungsbereich (L) transportiert wird, oder umgekehrt.

8. Verfahren nach einem der vorhergehenden Ansprüche, bei dem die ersten Werkstückteile (16a) an ersten Freischneidepositionen (34a) entlang ihrer Schneidkonturen (35) und die zweiten Werkstückteile (16b) an zweiten Freischneidepositionen (34b) entlang ihrer Schneidkonturen (35) freigeschnitten werden, wobei die ersten und die zweiten Freischneidepositionen (34a,b) in Bezug auf die Bewegungsrichtung (X) des Laserschneidkopfs (6) an entgegengesetzten Seiten der jeweiligen Schneidkonturen (35) positioniert sind.

9. Verfahren nach Anspruch 8, bei dem die ersten und zweiten Freischneidepositionen (34a,b) jeweils an einer der Mitte (32) des Werkstücks (15) zugewandten Seite der jeweiligen Schneidkonturen (35) positioniert sind.

10. Verfahren nach einem der vorhergehenden Ansprüche, bei dem die ersten Werkstückteile (16a) auf einer bezogen auf die Mitte (32) des Werkstücks (15) ersten Seite (36a) einer Ablagefläche (36) des Lagerungsbereichs (L) abgelegt werden und bei dem die zweiten Werkstückteile (16b) auf einer bezogen auf die Mitte (32) des Werkstücks (15) zweiten Seite (36b) einer Ablagefläche (36) des Lagerungsbereichs (L) abgelegt werden.

11. Verfahren nach einem der vorhergehenden Ansprüche, bei dem alle ersten Werkstückteile (16a) dieselbe Geometrie aufweisen.

12. Verfahren nach Anspruch 11, bei dem alle Werkstückteile (16a,b) dieselbe Geometrie aufweisen.

13. Verfahren nach einem der Ansprüche 1 bis 11, bei dem die ersten Werkstückteile (16a) und die zweiten Werkstückteile (16b) eine unterschiedliche Geometrie aufweisen.

14. Verfahren nach einem der vorhergehenden Ansprüche, ferner umfassend: Schneiden eines Werkstückteils (16a, 16b) entlang eines ersten Abschnitts (35a) einer Schneidkontur (35), während die mindestens eine erste Haltevorrichtung (22a, 23a, 24a) oder die mindestens eine zweite Haltevorrichtung (22b, 23b, 24b) in Transportrichtung (Y) bewegt wird, sowie Schneiden des Werkstückteils (16a, 16b) entlang eines zweiten Abschnitts (35b) der Schneidkontur (35) vor dem Freischneiden des Werkstückteils (16a, 16b) an einer Freischneideposition (34), während das Werkstückteil (16a, 16b) von der mindestens einen ersten Haltevorrichtung (22a, 23a, 24a) oder von der mindestens einen zweiten Haltevorrichtung (22b, 23b, 24b) gehalten wird.

## Claims

1. A method for transporting workpiece parts (16a, 16b) from a cutting area (S) of a laser cutting machine (2) to a storage area (L), comprising:
moving at least a first holding device (22a, 23a, 24a) for holding workpiece parts (16a) along a first guide (21a) in a transport direction (Y) lateral to a direction of motion (X) of a laser cutting head (6) of the laser cutting machine (2), and moving at least a second holding device (22b, 23b, 24b) for holding workpiece parts (16b) along a second guide (21b) in the transport direction (Y) lateral to the direction of motion (X) of the laser cutting head (6),
**characterized in that**
first workpiece parts (16a) which are cut within the cutting area (S) in a first half (15a) of a workpiece (15), relative to the direction of motion (X) of the laser cutting head (6), are transported from the cutting area (S) to the storage area (L) using the at least a first holding device (22a, 23a, 24a),
that second workpiece parts (16b) which are cut within the cutting area (S) in a second half (15b) of the workpiece (15), relative to the direction of motion (X) of the laser cutting head (6), are transported from the cutting area (S) to the storage area (L) using the at least a second holding device (22b, 23b, 24b), and that the transporting of a first workpiece part (16a) and a second workpiece part (16b) is done in a mutually alternating fashion.

2. The method according to Claim 1, in which a second workpiece part (16b) is cut off from the workpiece (15) during the transporting of a first workpiece part (16a) using the at least a first holding device (22a, 23a, 24a) and vice versa.

3. The method according to Claim 1 or 2, in which the alternating transporting of the first workpiece parts (16a) and the second workpiece parts (16b), respectively, occurs starting from the lateral edge (33a, 33b) of the workpiece (15), relative to the direction of motion (X) of the laser cutting head (6), and proceeds to the middle (32) of the workpiece (15), or vice versa.

4. The method according to Claim 1 or 2, in which the transporting of the first workpiece parts (16a) occurs starting from a lateral first edge (33a) of the workpiece (15), relative to the direction of motion (X) of the laser cutting head (6), and proceeds to the middle (32) of the workpiece (15), and in which the transporting of the second workpiece parts (16b) occurs starting from the middle (32) of the workpiece (15) and proceeds to a lateral second edge (33b) of the workpiece (15), relative to the direction of motion (X) of the laser cutting head (6), or vice versa.

5. The method according to one of the preceding claims, in which the first and second workpiece parts (16a, 16b) to be alternatingly transported are arranged in a plurality of rows (Z1, ..., Zn) which run parallel to the direction of motion (X) of the laser cutting head (6).

6. The method according to Claim 5, in which a workpiece part (16c, 16c`) which is cut in a respective row (Z1, ..., Zn) in the middle (32) of the workpiece (15) is transported from the cutting area (S) to the storage area (L) as the first or the last workpiece part of said respective row (Z1, ..., Zn).

7. The method according to one of Claims 5 or 6 in which the last cut workpiece part (16c) of a first row (Z1) is transported from the cutting area (S) to the storage area (L) by the at least a first holding device (22a, 23a, 24a), and in which the last cut workpiece part (16c`) of a second row (Z2) directly following the first row is transported from the cutting area (S) to the storage area (L) by the at least a second holding device (22b, 23b, 24b), or vice versa.

8. The method according to one of the preceding claims, in which the first workpiece parts (16a) are cut off along cutting contours (35) thereof at first cut-off positions (34a), and the second workpiece parts (16b) are cut off along cutting contours (35) thereof at second cut-off positions (34b), wherein the first and the second cut-off positions (34a,b) are positioned at opposite sides of the respective cutting contours (35), relative to the direction of motion (X) of the laser cutting head (6).

9. The method according to Claim 8 in which the first and the second cut-off positions (34a,b) are each positioned on a side of the respective cutting contours (35) which faces the middle (32) of the workpiece (15).

10. The method according to one of the preceding claims, in which the first workpiece parts (16a) are stored on a first side (36a) of a storage surface (36) of the storage area (L), relative to the center (32) of the workpiece (15), and in which the second workpiece parts (16b) are stored on a second side (36b) of a storage surface (36) of the storage area (L), relative to the center (32) of the workpiece (15).

11. The method according to one of the preceding claims, in which all first workpiece parts (16a) have the same geometry.

12. The method according to Claim 11, in which all workpiece parts (16a,b) have the same geometry.

13. The method according to one of Claims 1 to 11 in which the first workpiece parts (16a) and the second workpiece parts (16b) have a different geometry.

14. The method according to one of the preceding claims, further comprising: cutting a workpiece part (16a, 16b) along a first section (35a) of a cutting contour (35) while the at least a first holding device (22a, 23a, 24a) or the at least a second holding device (22b, 23b, 24b) is moved in the transport direction (Y), and, prior to cutting off the workpiece part (16a, 16b) at a cut-off position (34), cutting the workpiece part (16a, 16b) along a second section (35b) of the cutting contour (35) while the workpiece part (16a, 16b) is held by the at least a first holding device (22a, 23a, 24a) or by the at least a second holding device (22b, 23b, 24b).

## Revendications

1. Procédé de transport de parties de pièces (16a, 16b) depuis une zone de coupe (S) d'une machine de coupe laser (2) vers une zone de stockage (L), comprenant:
le déplacement d'au moins un premier dispositif de maintien (22a, 23a, 24a) destiné au maintien de parties de pièce (16a) le long d'un premier guide (21a) dans une direction de transport (Y) transversale à une direction de déplacement (X) d'une tête de coupe laser (6) de la machine de coupe laser (2), ainsi que le déplacement d'au moins un deuxième dispositif de maintien (22b, 23b, 24b) destiné au maintien de parties de pièce (16b) le long d'un second guide (21b) dans la direction de transport (Y) transversale à la direction de déplacement (X) de la tête de coupe laser (6),
**caractérisé en ce que**
des premières parties de pièce (16a), coupées à l'intérieur de la zone de coupe (S) dans une première moitié (15a) d'une pièce (15) par rapport à la direction de déplacement (X) de la tête de coupe laser (6), sont transportées au moyen du premier (au moins) dispositif de maintien (22a, 23a, 24a) depuis la zone de coupe (S) vers la zone de stockage (L),
**en ce que** des secondes parties de pièce (16b), coupées à l'intérieur de la zone de coupe (S) dans une seconde moitié (15b) de la pièce (15) par rapport à la direction de déplacement (X) de la tête de coupe laser (6), sont transportées au moyen du deuxième (au moins) dispositif de maintien (22b, 23b, 24b) depuis la zone de coupe (S) vers la zone de stockage (L), et **en ce que** le transport d'une première partie de pièce (16a) et d'une seconde partie de pièce (16b) s'effectue respectivement en alternance.

2. Procédé selon la revendication 1, selon lequel, pendant le transport d'une première partie de pièce (16a) au moyen du premier (au moins) dispositif de maintien (22a, 23a, 24a), une seconde partie de pièce (16b) est découpée de la pièce (15), et inversement.

3. Procédé selon la revendication 1 ou 2, selon lequel le transport alterné des premières parties de pièce (16a) et des secondes parties de pièce (16b) s'effectue respectivement à partir du bord latéral (33a, 33b) de la pièce (15) par rapport à la direction de déplacement (X) de la tête de coupe laser (6) vers le centre (32) de la pièce (15), ou inversement.

4. Procédé selon la revendication 1 ou 2, selon lequel le transport des premières parties de pièce (16a) s'effectue en partant d'un premier bord latéral (33a) de la pièce (15), par rapport à la direction de déplacement (X) de la tête de coupe laser (6), vers le centre (32) de la pièce (15), et selon lequel le transport des secondes parties de pièce (16b) s'effectue en partant du centre (32) de la pièce (15) vers un deuxième bord latéral (33b) de la pièce (15) par rapport à la direction de déplacement (X) de la tête de coupe laser (6), ou inversement.

5. Procédé selon l'une des revendications précédentes, selon lequel les premières et secondes parties de pièce (16a, 16b) à transporter en alternance sont disposées en une pluralité de lignes (Z1, ..., Zn) parallèles à la direction de déplacement (X) de la tête de coupe laser (6).

6. Procédé selon la revendication 5, selon lequel une partie de pièce (16c, 16c'), coupée dans une ligne respective (Z1, ..., Zn) au centre (32) de la pièce (15), est transportée en tant que première ou dernière partie de pièce de la ligne respective (Z1, ..., Zn) depuis la zone de coupe (S) vers la zone de stockage (L).

7. Procédé selon l'une des revendications 5 ou 6, selon lequel la dernière partie de pièce coupée (16c) d'une première ligne (Z1) est transportée par le premier (au moins) dispositif de maintien (22a, 23a, 24a) depuis la zone de coupe (S) vers la zone de stockage (L) et selon lequel la dernière partie de pièce coupée (16c') d'une deuxième ligne (Z2) suivant immédiatement la première est transportée par le deuxième (au moins) dispositif de maintien (22b, 23b, 24b) depuis la zone de coupe (S) vers la zone de stockage (L), ou inversement.

8. Procédé selon l'une des revendications précédentes, selon lequel les premières parties de pièce (16a) sont découpées à des premières positions de découpe (34a) le long de leurs contours de coupe (35) et les secondes parties de pièce (16b) sont découpées à des secondes positions de découpe (34b) le long de leurs contours de coupe (35), les premières et secondes positions de coupe (34a,b) étant positionnées sur des côtés opposés des contours de coupe (35) respectifs par rapport à la direction de déplacement (X) de la tête de coupe laser (6).

9. Procédé selon la revendication 8, selon lequel les premières et secondes positions de découpe (34a, b) sont respectivement positionnées sur un côté des contours de coupe respectifs (35) tourné vers le centre (32) de la pièce (15).

10. Procédé selon l'une des revendications précédentes, selon lequel les premières parties de pièce (16a) sont déposées sur un premier côté (36a), par rapport au centre (32) de la pièce (15), d'une surface de dépôt (36) de la zone de stockage (L) et selon lequel les secondes parties de pièce (16b) sont déposées sur un second côté (36b), par rapport au centre (32) de la pièce (15), d'une surface de dépôt (36) de la zone de stockage (L).

11. Procédé selon l'une des revendications précédentes, selon lequel toutes les premières parties de pièce (16a) présentent la même géométrie.

12. Procédé selon la revendication 11, selon lequel toutes les parties de pièce (16a,b) présentent la même géométrie.

13. Procédé selon l'une des revendications 1 à 11, selon lequel les premières parties de pièce (16a) et les secondes parties de pièce (16b) présentent une géométrie différente.

14. Procédé selon l'une des revendications précédentes, comprenant en outre : la coupe d'une partie de pièce (16a, 16b) le long d'une première section (35a) d'un contour de coupe (35) tandis que le premier (au moins) dispositif de maintien (22a, 23a, 24a) ou le deuxième (au moins) dispositif de maintien (22b, 23b, 24b) est déplacé dans la direction de transport (Y), ainsi que la coupe de la partie de pièce (16a, 16b) le long d'une seconde section (35b) du contour de coupe (35) avant la découpe de la partie de pièce (16a, 16b) à une position de découpe (34), tandis que la partie de pièce (16a, 16b) est maintenue par le premier (au moins) dispositif de maintien (22a, 23a, 24a) ou par le deuxième (au moins) dispositif de maintien (22b, 23b, 24b).
